(19) **Europäisches Patentamt**

**European Patent Office**

**Office européen des brevets**

(11) **EP 1 252 721 B1**

(12) **EUROPEAN PATENT SPECIFICATION**

(45) Date of publication and mention
of the grant of the patent:
**12.04.2006 Bulletin 2006/15**

(51) Int Cl.:
***H04B 1/707*** (2006.01)

(21) Application number: **00907179.6**

(22) Date of filing: **04.02.2000**

(86) International application number:
**PCT/US2000/003031**

(87) International publication number:
**WO 2001/058038 (09.08.2001 Gazette 2001/32)**

(54) **SYSTEM FOR CONTINUOUS WAVE REJECTION**

SYSTEM ZUR DAUERSTRICHUNTERDRÜCKUNG

SYSTEME DE REJET DES ONDES ENTRETENUES

(84) Designated Contracting States:
**AT BE CH CY DE DK ES FI FR GB GR IE IT LI LU
MC NL PT SE**

(43) Date of publication of application:
**30.10.2002 Bulletin 2002/44**

(73) Proprietor: **INTERDIGITAL TECHNOLOGY
CORPORATION
Wilmington, DE 19801 (US)**

(72) Inventors:
• **SEZGIN, Nadir
Jackson Heights, NY 11372 (US)**
• **DICK, Stephen, G.
Nesconset, NY 11767 (US)**

(74) Representative: **Tomlinson, Edward James
Frohwitter
Patent- und Rechtsanwälte
Possartstrasse 20
81679 München (DE)**

(56) References cited:
• GOISER A M J ET AL: "ADAPTIVE CONTINUOUS WAVE INTERFERENCE-REJECTION IN DIGITAL SPREAD SPECTRUM RECEIVERS" ARCHIV FUR ELEKTRONIK UND UBERTRAGUNGSTECHNIK, DE,S.HIRZEL VERLAG. STUTTGART, vol. 44, no. 3, 1 May 1990 (1990-05-01), pages 247-254, XP000127792 ISSN: 0001-1096
• GOISER A M J: "Adaptive interference reduction using manipulated signal statistics" 1996 IEEE 4TH INTERNATIONAL SYMPOSIUM ON SPREAD SPECTRUM TECHNIQUES AND APPLICATIONS PROCEEDINGS. TECHNICAL PROGRAM. (CAT. NO.96TH8210), PROCEEDINGS OF ISSSTA'95 INTERNATIONAL SYMPOSIUM ON SPREAD SPECTRUM TECHNIQUES AND APPLICATIONS, MAINZ, GERMANY, , pages 277-281 vol.1, XP002149339 1996, New York, NY, USA, IEEE, USA ISBN: 0-7803-3567-8

**Description**

**Field of the Invention**

This invention relates to the field of Code Division Multiple Access (CDMA) communication systems. More particularly, the present invention relates to a system for accurately detecting short codes in a communication environment which includes continuous wave (CW) interference.

**Description of Prior Art**

With the dramatic increase in the use of wireless telecommunication systems in the past decade, the limited portion of the RF spectrum available for use by such systems has become a critical resource. Wireless communications systems employing CDMA techniques provide an efficient use of the available spectrum by accommodating more users than more traditional time division multiple access (TDMA) and frequency division multiple access (FDMA) systems.

In a CDMA system, the same portion of the frequency spectrum is used for communication by all subscriber units. Typically, for each geographical area, a single base station serves a plurality of subscriber units. The baseband data signal within each subscriber unit is multiplied by a pseudo-random code sequence, called the spreading code, which has a much higher transmission rate than the data. Thus, the data signal is spread over the entire available bandwidth. Individual subscriber unit communications are discriminated by assigning a unique spreading code to each communication link.

At times it is also useful in a CDMA system to transmit codes which are of shorter length than the usual spreading code. Instead of using a single, extremely long spreading code, a much shorter code is used and repeated numerous times. The use of short codes provides an advantage over the use of longer codes because the short codes can be detected much more quickly. However, the use of short codes has an inherent drawback, since the short code is repeated many times, it is much less random than a long code. When short codes are used, known detection algorithms can have an increased number of false acquisitions in the presence of continuous wave (CW) interference since the repetitive short codes can correlate with CW interference.

When there is correlation between short codes and CW interference a false acquisition occurs, an incorrect output from a short code detector in a base station can last for a time period equal to the remainder of a short code. For example, in a known prior art short code system, short codes having 195 chips, which are transmitted at a rate of 15 megahertz, repeat for a three millisecond period. At the end of the three millisecond period a new short code is transmitted in the same manner. In such a system it is possible for a detector output to lock up for the remainder of the three millisecond period in response to a false acquisition in the presence of CW interference.

It is known in the art of mobile communication systems which employ CDMA for a base-station receiver to use various detection tests to determine the presence of short codes transmitted by a subscriber unit. One such test known in the art is a sequential probability ratio test (SPRT) detection algorithm. The problem of false detections in the presence of CW interference can occur in detection algorithms such as a SPRT detection algorithm, even though SPRT detection algorithms can be very effective at rejecting noise under other circumstances.

In SPRT detection algorithms, a likelihood ratio is computed and adjusted after each input sample is taken. The repeated adjustments cause the likelihood ratio to increase when a short code is present and decrease when a short code is not present. When the likelihood ratio increases and crosses a predetermined acceptance threshold, a determination is made that a short code is present. When the likelihood ratio decreases and crosses a predetermined rejection threshold, a determination is made that a short code is not present. When the likelihood ratio is between the acceptance and rejection thresholds further samples are taken and further adjustments are made to the likelihood ratio until one of the thresholds is crossed. Thus, the false detection problem can occur in a SPRT detection algorithm when the CW incorrectly causes the likelihood ratio to increase and cross over the acceptance threshold.

It is desirable to provide method for preventing false acquisitions of short codes in the presence of CW interference that does not limit the number of codes available for use within the system.

US 5 844 936 discloses a method for eliminating interferences in a spread spectrum system using adaptive threshold selection.

**SUMMARY OF THE INVENTION**

A method is disclosed for receiving transmitted signals in the presence of CW interference in a communication system that determines the presence of a short code in a received signal by comparing the output of a detector with threshold calculations made in accordance with a sample of a received signal. The method includes obtaining a first input power value of the received signal at a first sample time and obtaining a second input power value of the received signal at a second sample time. The first and second power values are compared to provide an input sample comparison and the forgoing steps are repeated to provide a plurality of input sample comparisons. The detector threshold is adjusted in accordance with the plurality of sample comparisons.

## BRIEF DESCRIPTION OF THE DRAWINGS

**Figure 1** shows a schematic representation of the system for CW rejection of the present invention; and
**Figure 2** shows a graphical representation of the relationship between samples obtained within the system of **Figure 1** and CW interference applied to the input of the system of **Figure 1**.
**Figure 3** shows a schematic representation of an alternate system for CW rejection.

## DETAILED DESCRIPTION OF THE INVENTION

The features, objects, and advantages of the present invention will become more apparent from the detailed description set forth below when taken in conjunction with the drawings in which like reference characters identify corresponding elements throughout.

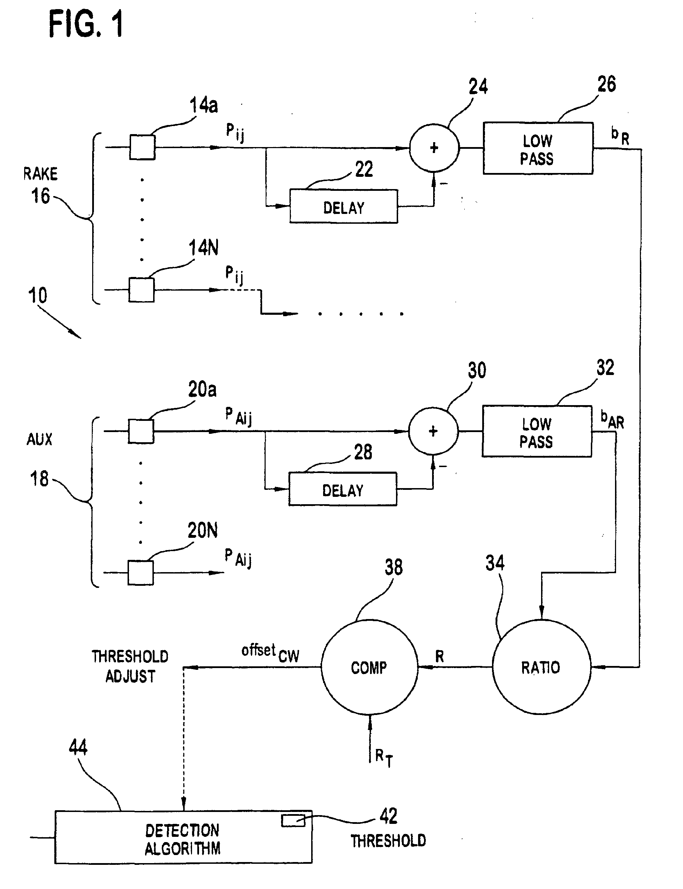

Referring now to **Figure 1,** there is shown a RAKE despreader system **10**. The RAKE despreader system 10 includes a RAKE **16** and an auxiliary (AUX) RAKE **18**. The RAKE **16** calculates correlation values between the input signal and a locally-generated short pseudorandom code (hereinafter "short code"). AUX RAKE **18** calculates correlation values between the input signal and a locally-generated long pseudorandom code (hereinafter "long code"). Although the RAKE **16** and AUX RAKE **18** are disclosed with one despreader output each for simplicity, it will be understood by those of skill in the art that both the RAKE **16** and the AUX RAKE **18** can be provided with a plurality of despreaders, each despreader providing an output for a different time sample in accordance with the present invention.

The RAKE **16** provides one or more complex samples which are each converted into a power magnitude value $P_{i,j}$ by blocks **14a,** ..., **14n.** It should be noted here that blocks **14a,** ..., **14n** and associated despreader equipment may be replicated N times for a system **10** having N despreaders/filters. The power of a sample at time i at the jth RAKE filter is obtained. The power of a sample at time i at the jth RAKE filter is denoted as $P_{i,j}$, where j = 1,..., N and N is the total number of filters in the RAKE. It will be recognized by those skilled in the art that blocks **14a, .... 14n** can produce a magnitude value of $P_{i,j}$ either with a magnitude function or a squaring function. Power value $P_{i,j}$ represents a power determination corresponding to a symbol period within a short code. A symbol period is the period required to transmit one information bit, where the bit has been spread by a pseudo random code. AUX RAKE **18** provides a complex sample which is converted in to a power value $P_{A,i,j}$ by block **20.** Similarly, block **20** and associated despreader equipment may be replicated and is shown here as blocks **20a,** ..., **20N** for a system having N despreaders/filters. Output sample value $P_{Ai,j}$ represents a power determination corresponding to a symbol period.

The relationship between a sample value $P_{i,j}$ obtained from RAKE **16** and the previous sample value in time $P_{i-1,j}$ is random in the case where the input of RAKE despreader system **10** is random. However, the relationship between $P_{i,j}$ and $P_{i-1,j}$ is correlated when the input includes noise that is correlated with a short code being detected using RAKE despreader system **10**. Thus, the relationship between samples $P_{i,j}$ and $P_{i-1,j}$ is sensitive to the amount of CW interference in the input of RAKE despreader system **10** which correlates with the short code.

The relationship between a sample value $P_{A,i,j}$ obtained within AUX RAKE **18** and the previous sample value in time $P_{A,i-1,j}$ is random in the case where the input to RAKE despreader system **10** is random. However, AUX RAKE **18** is not correlated with a short code being detected using RAKE despreader system **10**. AUX RAKE 18 uses a long pseudo-random code which does not correlate with CW interference. Therefore, the power of any two consecutive samples taken at the output of AUX RAKE **18** are not correlated to each other. Thus, AUX RAKE **18** provides an output substantially representative of background noise in the presence of CW interference. The relationship between the sample values obtained within RAKE **16** and the sample values obtained within AUX RAKE **18** can be used as a measure of the amount of CW interference in the input of RAKE despreader system **10**.

Therefore, in accordance with the present invention, at each sample time i, a determination is made of the value of $P_{i,j}-P_{i-1,j}$ at the output of RAKE **16**. The value of $P_{i,j}-P_{i-1,j}$ can be determined using delay **22** and summer **24** of RAKE despreader system **10** or any other method known to those skilled in the art.

The correlation ($b_r$) between successive input values $P_{i,j}$ and $P_{i-1,j}$ is found by taking the difference of values $P_{i,j}$ and $P_{i-1,j}$ and passing this difference through low pass filter **26**. In one implementation, low pass filter **26** can be effected by an averaging routine which sums successive outcomes of $P_{i,j}-P_{i-1,j}$ and divides the sum by the number of terms added. In such an implementation, where the predetermined number of sample periods used to determine $b_R$ is K, the average difference value $b_R$ can be expressed as:

$$b_R = \left( \sum_{k=0}^{K-1} P_{i,j-k} - P_{i-1,j-k} \right) / K.$$ **Equation 1**

When the input signal of RAKE **16** is only background noise and the sample values $P_{i,j}$ and $P_{i-1,j}$ have a random relationship with respect to each other, $b_R$ can be expected to have a small value. Since the differences between successive values of $P_{i,j}$ will not be correlated to each other in the case of a random relationship then when the successive values of $P_{i,j}$ are correlated $b_R$ can provide a measure of the correlation of the samples $P_{i,j}$ obtained from RAKE **16**.

In a similar manner, during each sample period i, a determination is made of the difference value of $P_{A,i,j}-P_{A,i-1,j}$ N, at the output of AUX RAKE **18**. The difference value of $P_{A,i,j}-P_{A,i-1,j}$ can be obtained using delay **28** and summer **30** or any other methods known to those skilled in the art.

The correlation between successive input values $P_{A,i,j}$ and $P_{A,i-1,j}$ is found by taking the difference of values $P_{A,i,j}$ and $P_{A,i-1,j}$ and passing this value through low pass filter **32**. In one implementation, low pass filter **32** can be effected by an averaging routine which sums successive outcomes of $P_{A,ij}-P_{A,i-1,j}$ and divides the sum by the number of terms added. The value of $P_{A,i}-P_{A,i-1}$ can be averaged over a predetermined number of sample periods to form an average difference value $b_{AR}$ using low pass filter **32**. The average difference value $b_{AR}$ provides a measure of the amount of background noise obtained by AUX RAKE **18** and, where the predetermined number of samples is equal to K, can be expressed as:

$$b_{AR} = \left( \sum_{k=0}^{K-1} P_{A,i,j-k} - P_{A,i-1,j-k} \right) / K.$$ **Equation 2**

As shown in **Figure 1,** the absolute values of $b_R$ and $b_{AR}$ are calculated in block **34** and these absolute values are compared in **38** to the threshold $R_T$. This value, Offset$_{CW}$ is then used to adjust the detection threshold **42** in a detection algorithm **44** such as a Sequential Probability Ratio Test. The presence of CW interference in the input signal will cause Offse$_{CW}$ to have a positive value, which, when added to the SPRT detection threshold, will increase the threshold by an amount proportional to the amount of CW interference. Raising the detection threshold by an amount related to the degree of CW interference, ensures that CW interference will not cause a false detection of a short code. Those skilled in the art will recognize that in a system where the subscriber unit power is adjusted upward until the unit has been acquired by the base station, increasing the SPRT detector threshold in the presence of CW interference will result in the subscriber unit increasing its signal power until a legitimate short code can be acquired by the base station. In an alternative embodiment of the present invention, Offset$_{CW}$ is used to adjust downward a likelihood ratio of an SPRT. This would have the same effect as raising the detection threshold.

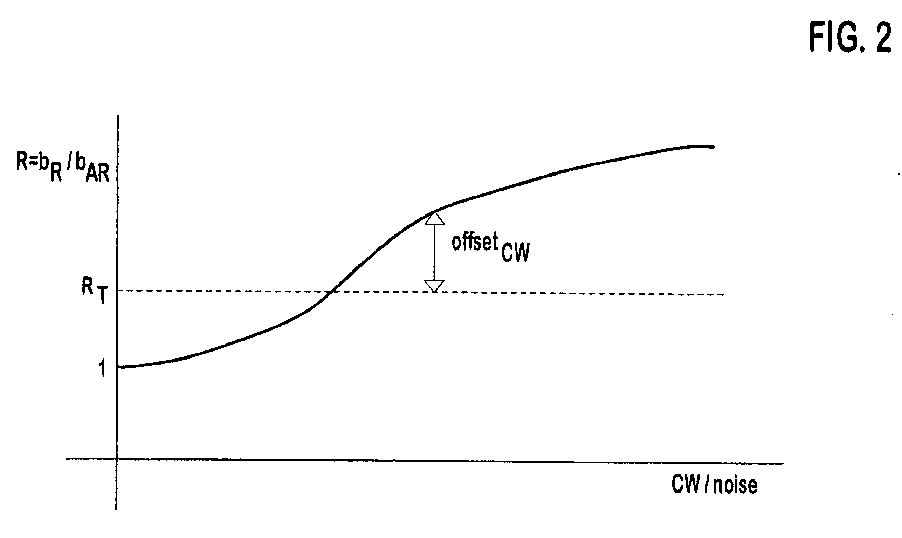

Referring now to **Figure 2**, there is shown graphical representation **50** of the ratio R = $b_R/b_{AR}$. Graphical representation **50** sets forth the relationship between the ratio R and the ratio of CW interference to background noise of the input signal applied to RAKE despreader system **10**. When no CW interference is present and $b_R = b_{AR}$, the ratio R reaches its minimum value of one. Under these conditions the false acquisition problems associated with codes having large imbalances do not occur. As CW interference increases with respect to background noise, the ratio R increases proportionally with the amount of CW interference. In another embodiment of the present invention, the ratio R may be calculated, and a threshold value $R_T$ between these two cases is established. Only when R is greater than threshold value $R_T$ is the SPRT or similar detection method detection threshold adjusted by Offset$_{CW}$.

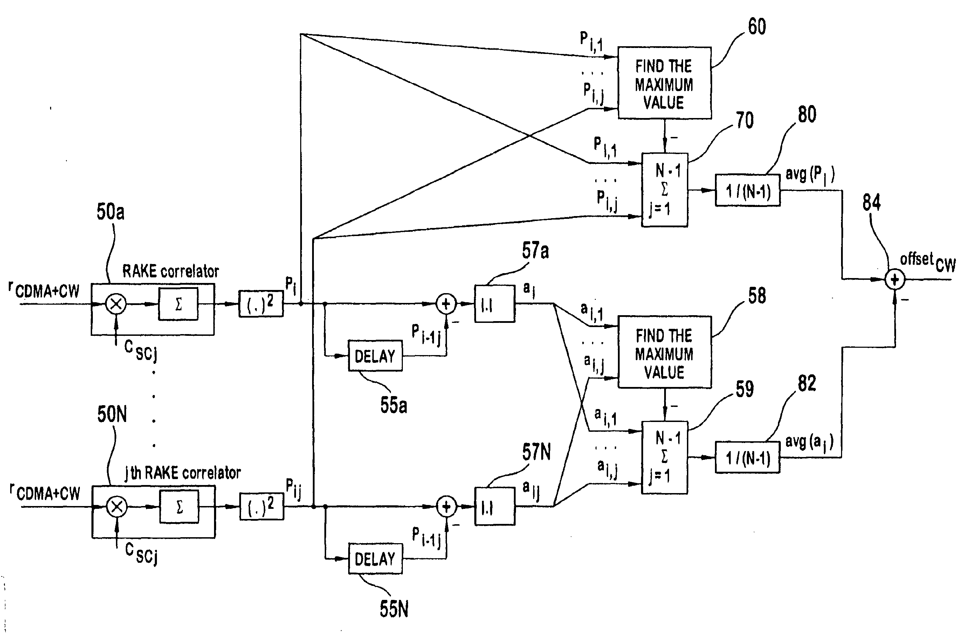

An alternate embodiment is shown in **Figure 3.** A plurality of RAKE correlators **50a**, ..., **50N** receive the CDMA signal containing the CW signal. The complex sample is converted into a power magnitude value $P_{i,j}$ where i indicates the sample in time and j indicates the RAKE correlator **50a**, ..., **50N**. The maximum power sample MAX $(P_{i,j})$ is ascertained at block **60** and that sample is removed at block **70**.

The average value of $P_{i,j}$, avg($P_i$), is obtained by averaging over N-1 of $P_{i,j}$ values. That is:

$$avg\left(P_i\right) = 1/\left(N-1\right)\sum_{j=1}^{N-1} P_{i,j}$$ **Equation 3**

Note that the maximum $P_{i,j}$ value is not used, since it might contain the signal rather than CW interference. The calculation of avg $(P_i)$ is performed at block **80**.

For the jth RAKE filter, the absolute value of the difference between the power samples obtained at time i, $P_{i,j}$, and the previous power samples obtained at time i-1, $P_{i-1,j}$, is denoted as $a_{ij}$. First, a delay **55a...., 50N** is applied to each $P_{i,j}$. The absolute value $a_i$ of the difference between the power samples $P_i$ and $P_{i-1,j}$ is determined at block **57a, ..., 57N.** The maximum MAX $(a_{ij})$ is removed at block **58**.

The average value of $a_{i,j}$, avg$(a_i)$, is obtained by averaging over the same N-1 RAKE filters **50a, ..., 50N** at blocks **59** and **82.** That is:

$$avg\left(a_i\right) = 1 / \left(n - 1\right) \sum_{j=1}^{N-1} a_{ij} \qquad \textbf{Equation 4}$$

Then, avg$(P_i)$ is compared to avg$(a_i)$ at summer **84** in order to find the offset term due to the CW interference present in the CDMA signal. This term is denoted by offset$_{CW}$ and used similarly to the embodiment of **Figure 1** to the threshold **42.**

The previous description of the preferred embodiments is provided in order to enable those skilled in the art to make and use the present invention. The various modifications to the embodiments shown will be readily apparent to those skilled in the art, and the generic principles defined herein can be applied to other embodiments without providing an inventive contribution.

**Claims**

1. A method for receiving transmitted signals in a communication system having a detection threshold (42) for comparing with the detector threshold calculations made in accordance with a sample of a received signal in order to determine the presence of a continuous wave interference in the received signal, comprising the steps of:

   (a) obtaining a first input sample of the received signal at a first sample time ($P_{i,j}$);
   (b) obtaining a second input sample of the received signal at a second sample time ($P_{i-1,j}$);
   (c) comparing the first and second samples in order to provide an input sample comparison; and

   either

   (1) repeating steps (a) - (c) over a predetermined number of sample periods in order to provide a corresponding plurality of input sample comparisons;
   (2) obtaining a correlation value ($b_R$) between successive first and second input samples from the plurality of samples;
   (3) obtaining a measure of the amount of background noise ($b_{AR}$);
   (4) obtaining a ratio between the correlation value ($b_R$) and the measure of the amount of background noise ($b_{AR}$)
   (5) comparing the ratio with a threshold value to obtain an offset value (offset$_{CW}$); and
   (6) adjusting the detector threshold in accordance with the offset value,

   or

   (i) performing steps (a) - (c) for a plurality of RAKE correlator inputs to obtain a plurality of sample comparisons;
   (ii) obtaining an average of the plurality of sample comparisons less a maximum sample comparison;
   (iii) comparing the average of the plurality of sample comparisons with an average power magnitude value to obtain an offset value(offset$_{CW}$); and
   (iv) adjusting the detector threshold in accordance with the offset value (offset$_{CW}$).

2. The method for receiving transmitted signals of claim 1, wherein the detection threshold (42) is an upper threshold and comprising the step of adjusting the detection threshold upwards in accordance with the offset value signal.

3. The method for receiving transmitted signals of claim 1, wherein the step of comparing the first and second input power values ($P_{i,j}$, $P_{i-1j}$) comprises performing a subtraction operation upon the first and second input power values.

4. A continuous wave rejection subsystem (10) for use in a communications system comprising:

a first filter (16) for sampling a received signal and generating a power value for each sample;

means (24) for determining a difference value between power values of adjacent samples;

means (26) for determining an average difference value ($b_R$) by averaging successive difference values over a predetermined number of sample periods;

means (18) for determining an average power value ($b_{AR}$) representative of background noise not correlated with continuous wave interference; and

means (34, 38) for determining a ratio between the average difference value and the average power value and comparing the ratio with a threshold value to generate an offset signal for adjusting a detection threshold (42).

5. A continuous wave rejection subsystem for use in a communications system comprising:

a plurality of filters (50a - 50N) each for sampling a received signal and generating a respective power value for each sample;

for each filter, means (55a - 55N) for determining a difference value between power values of adjacent samples;

means (58, 59) for obtaining an average value of the obtained plurality of difference values less a maximum difference value; and

means (84) for comparing the average value with an average power magnitude value to generate an offset signal for adjusting a detection threshold.

**Patentansprüche**

1. Verfahren zum Empfangen übertragener Signale in einem Kommunikationssystem, das einen Erfassungsschwellenwert (42) hat, zum Vergleichen mit den gemäß einer Abtastung eines empfangenen Signals durchgeführten Erfassungsschwellenwertberechnungen, um die Anwesenheit einer Dauerstrichinterferenz (CW-Interferenz) im empfangenen Signal zu bestimmen, mit den folgenden Schritten:

(a) Erhalten einer ersten Eingabeabtastung des empfangenen Signals zu einer ersten Abtastzeit ($P_{i,j}$);
(b) Erhalten einer zweiten Eingabeabtastung des empfangenen Signals zu einer zweiten Abtastzeit ($P_{i-1,j}$);
(c) Vergleichen der ersten und der zweiten Abtastung zum Liefern eines Eingabeabtastungsvergleichs; und

entweder

(1) Wiederholen der Schritte (a) - (c) über eine vorbestimmte Anzahl von Abtastperioden zum Liefern einer entsprechenden Vielzahl von Eingabeabtastungsvergleichen;
(2) Erhalten eines Korrelationswerts ($b_R$) zwischen aufeinander folgenden ersten und zweiten Eingabeabtastungen aus der Vielzahl von Abtastungen;
(3) Erhalten eines Maßes für die Menge an Hintergrundrauschen ($b_{AR}$);
(4) Erhalten eines Verhältnisses zwischen dem Korrelationswert ($b_R$) und dem Maß für die Menge an Hintergrundrauschen ($b_{AR}$);
(5) Vergleichen des Verhältnisses mit einem Schwellenwert zum Erhalten eines Versatzwerts ($offset_{CW}$); und
(6) Einstellen des Erfassungsschwellenwerts gemäß dem Versatzwert,

oder

(i) Durchführen der Schritte (a) - (c) für eine Vielzahl von RAKE-Korrelator-Eingaben zum Erhalten einer Vielzahl von Abtastungsvergleichen;
(ii) Erhalten eines Durchschnitts der Vielzahl von Abtastungsvergleichen ohne einen maximalen Abtastungsvergleich;
(iii) Vergleichen des Durchschnitts der Vielzahl von Abtastungsvergleichen mit einem durchschnittlichen Leistungsstärkewert zum Erhalten eines Versatzwerts ($offset_{CW}$); und
(iv) Einstellen des Erfassungsschwellenwerts gemäß dem Versatzwert ($offset_{CW}$).

2. Verfahren zum Empfangen übertragener Signale nach Anspruch 1, wobei der Erfassungsschwellenwert (42) ein oberer Schwellenwert ist und das Verfahren den Schritt des Einstellens des Erfassungsschwellenwerts nach oben gemäß dem Versatzwertsignal aufweist.

3. Verfahren zum Empfangen übertragener Signale nach Anspruch 1, wobei der Schritt des Vergleichens des ersten und des zweiten Eingabeleistungswerts ($P_{i, j}$, $P_{i-1, j}$) das Durchführen einer Subtraktionsoperation an dem ersten und zweiten Eingabeleistungswert umfasst.

4. Subsystem (10) zum Abweisen von Dauerstrichinterferenz (CW-Interferenz) zur Verwendung in einem Kommunikationssystem, umfassend:

einen ersten Filter (16) zum Abtasten eines empfangenen Signals und zum Erzeugen eines Leistungswerts für jede Abtastung;
Mittel (24) zum Bestimmen eines Differenzwerts zwischen Leistungswerten benachbarter Abtastungen;
Mittel (26) zum Bestimmen eines durchschnittlichen Differenzwerts ($b_R$) durch Mittelwertbestimmen aufeinander folgender Differenzwerte über eine vorbestimmte Anzahl von Abtastperioden;
Mittel (18) zum Bestimmen eines durchschnittlichen Leistungswerts ($b_{AR}$), der für ein Hintergrundrauschen repräsentativ ist, das nicht mit der Dauerstrichinterferenz korreliert; und
Mittel (34, 38) zum Bestimmen eines Verhältnisses zwischen dem durchschnittlichen Differenzwert und dem durchschnittlichen Leistungswert und zum Vergleichen des Verhältnisses mit einem Schwellenwert zum Erzeugen eines Versatzsignals zum Einstellen eines Erfassungsschwellenwerts (42).

5. Subsystem (10) zum Abweisen von Dauerstrichinterferenz (CW-Interferenz) zur Verwendung in einem Kommunikationssystem, umfassend:

eine Vielzahl von Filtern (50a - 50N), von denen jeder zum Abtasten eines empfangenen Signals und zum Erzeugen eines entsprechenden Leistungswerts für jede Abtastung dient;
Mittel (55a - 55N) für jeden Filter zum Bestimmen eines Differenzwerts zwischen Leistungswerten benachbarter Abtastungen;
Mittel (58, 59) zum Erhalten eines Durchschnittswerts der erhaltenen Vielzahl von Differenzwerten ohne einen maximalen Differenzwert; und
Mittel (84) zum Vergleichen des Durchschnittswerts mit einem durchschnittlichen Leistungsstärkewerts zum Erzeugen eines Versatzsignals zum Einstellen eines Erfassungsschwellenwerts.

## Revendications

1. Procédé de réception de signaux transmis dans un système de communication ayant un seuil de détection (42) pour comparer aux calculs de seuil de détecteur réalisés sur un échantillon d'un signal reçu afin de déterminer la présence d'une interférence d'onde continue dans le signal reçu, comprenant les étapes de :

(a) obtention d'un premier échantillon d'entrée du signal reçu à un premier temps d'échantillonnage ($P_{ij}$) ;
(b) obtention d'un second échantillon d'entrée du signal reçu à un second temps d'échantillonnage ($P_{i-1j}$) ;
(c) comparaison du premier échantillon et du second échantillon afin de produire une comparaison des échantillons d'entrée ; et

soit

(1) répétition des étapes (a) à (c) pour un nombre prédéterminé de périodes d'échantillonnage afin de produire une pluralité correspondante de comparaisons d'échantillons d'entrée ;
(2) obtention d'une valeur de corrélation ($b_R$) entre le premier échantillon et le second échantillon parmi la pluralité des échantillons ;
(3) obtention d'une mesure de la quantité du bruit de fond ($b_{AR}$) ;
(4) obtention d'un rapport de la valeur de corrélation ($b_R$) à la mesure de la quantité de bruit de fond ($b_{AR}$) ;
(5) comparaison du rapport à la valeur de seuil pour obtenir une valeur de décalage ($offset_{cw}$) ;
et
(6) ajustement du seuil de détecteur en fonction de la valeur de décalage ;

soit

(i) réalisation des étapes (a) à (c) pour une pluralité d'entrées d'un corrélateur RAKE pour obtenir une pluralité de comparaisons d'échantillons ;
(ii) obtention d'une moyenne de la pluralité des comparaisons d'échantillons moins une comparaison d'échantillon maximale ;

(iii) comparaison de la moyenne des comparaisons d'échantillons à une valeur de puissance moyenne pour obtenir une valeur de décalage (offset$_{cw}$) ; et

(iv) ajustement du seuil du détecteur en fonction de la valeur de décalage (offset$_{cw}$).

2. Procédé de réception des signaux transmis selon la revendication 1, dans lequel le seuil de détection (42) est un seuil supérieur et comprenant la comparaison de l'étape d'ajustement du seuil de détection vers le haut en fonction du signal de la valeur de décalage.

3. Procédé de réception des signaux transmis selon la revendication 1, dans lequel l'étape de comparaison de la première valeur de puissance d'entrée et la seconde valeur de puissance d'entrée ($P_{ij}$, $P_{i-1j}$) comprend la réalisation d'une opération de soustraction en fonction de la première valeur de puissance d'entrée et la seconde valeur de puissance d'entrée.

4. Sous-système de réjection d'onde continue (10) pour un système de communication comprenant :

un premier filtre (16) pour échantillonner un signal reçu et pour générer une valeur de puissance pour chaque échantillon ;

des moyens (24) de détermination d'une valeur de différence entre les valeurs de puissance des échantillons adjacents ;

des moyens (26) de détermination d'une valeur de différence moyenne ($b_R$) en calculant la moyenne des valeurs de différence successives pour un nombre prédéterminé de périodes d'échantillonnage ;

des moyens (18) de détermination d'une valeur de puissance moyenne ($b_{AR}$) correspondant au bruit de fond qui n'est pas corrélé à l'interférence d'onde continue ; et

des moyens (34,38) de détermination d'un rapport de la valeur de différence moyenne à la valeur de puissance moyenne et de comparaison du rapport à une valeur de seuil pour produire un signal de décalage pour ajuster un seuil de détection (42).

5. Sous-système de réjection d'onde continue pour un système de communication comprenant :

une pluralité de filtres (50a-50N) chacun pour échantillonner un signal reçu et pour générer une valeur de puissance correspondante pour chaque échantillon ;

pour chaque filtre, des moyens (55a-55N) de détermination d'une valeur de différence entre les valeurs de puissance des échantillons adjacents ;

des moyens (58,59) d'obtention d'une valeur moyenne de la pluralité obtenue de valeurs de différence moins une valeur de différence maximale ; et

des moyens (84) de comparaison de la valeur moyenne à une valeur de puissance moyenne pour produire un signal de décalage d'ajustement d'un seuil de détection.

EP 1 252 721 B1

# FIG. 1

FIG. 2

EP 1 252 721 B1